# EUROPEAN PATENT APPLICATION

(11) **EP 4 756 272 A1**
(43) Date of publication of application: **10.06.2026**
(21) Application number: 24217613.9
(22) Date of filing: 04.12.2024
(51) Int. Cl.: F16L 1/10, B23K 37/0533, B25B 1/20

(54) **PIPE CLAMP ASSEMBLY, AND A METHOD FOR ALIGNING TWO PIPES USING THE PIPE CLAMP ASSEMBLY**

(71) Applicant: WELD-TECH ApS, 4000 Roskilde (DK)
(72) Inventor: Grønmark, René, 4300 Holbæk (DK)
(74) Representative: Holme Patent A/S

(57) **Abstract**

A pipe clamp assembly (1) comprising an elongated tightening member (2) configured to be arranged at least partly around the adjacent ends of two pipes to be temporarily aligned, and a tightening tool (3) that is configured to tighten the elongated tightening member (2), and is provided with a first engagement part (6) and a second engagement part (7) configured to engage with the elongated tightening member (2). The first and second engagement part (6, 7) are detachable attached parts of the tightening tool (3).

## Description

The present invention relates to a pipe clamp assembly comprising an elongated tightening member configured to be arranged at least partly around at least one of adjacent ends of two opposite pipes that are to be temporarily aligned, and a tightening tool configured to tighten the elongated tightening member around the pipes, which tightening tool is of the kind that has a first engagement part and a second engagement part configured to engage opposite free ends of the elongated tightening member. The pipes can e.g. be two metal pipes to be joined by welding, or similar techniques.

Within the context of the present invention, the term "pipe" includes a straight pipe, and a pipe ending with a bend; and includes pipes with a circular, oval, or rectangular cross-section.

Supports, such as jackstands, are typically used for supporting the pipes during aligning, and to facilitate that the adjacent ends of the opposite pipes are in close proximity to each other.

Due to the heavy load and tension that the engagement parts of a pipe clamp assembly is subjected to, known tightening tools have engagement parts that integral parts.

Furthermore, known tightening tools are only suitable for engagement with one specific elongated tightening member, thus not suitable for engagement with another elongated tightening member with a different shape and/or different dimensions.

With the known pipe clamp assemblies, it is impossible to use one and the same tightening tool to tension different tensioning members.

It is a main aspect of the present invention to provide an improved pipe clamp assembly by means of which at least some of the above-mentioned disadvantages are remedied.

It is a second aspect of the present invention to provide a universal pipe clamp assembly with a tightening tool that can used with different tightening members to fit different pipe dimensions.

It is a third aspect of the present invention to provide a pipe clamp assembly being less expensive than conventional pipe clamp assemblies.

It is a fourth aspect of the present invention to provide a pipe clamp assembly solution that takes up little space and requires less material.

These and further aspects are achieved according to the present invention by making at least one of the first engagement part and the second engagement part detachable.

Preferably, both the first engagement part and the second engagement part are detachable.

Within the context of the present invention, the term "main body of the tightening tool", or just "main body", means the parts of the tightening tool except the first engagement part and the second engagement part. The term "attached position" means the position of the first engagement part and the second engagement part when attached to the main body of the tightening tool.

The tightening tool may have a main body comprising a first arm with a free first distal end part providable with the detachable first engagement part, and a second arm with a free second distal end part providable with the detachable second engagement part, which first and second arm are hingely coupled to the main body at opposite proximal end parts, and a tightening means configured for moving the first arm and the second arm part towards and away from each other to tighten and untighten the elongated tightening member, respectively.

More specifically the main body of the tightening tool may be of the kind having two opposite arms provided with detachable engagement parts at their distal free ends. The arms are hinged together at their proximal end parts by means of a first H-shaped bridge member in order for the arms to be moveable towards and away from each other. A wider second H-shaped bridge member is arranged closer to the distal end parts of the opposite arms and delimits slots that allow the opposite arms to reciprocate towards and away from end stops spanning the respective free ends of the second wider H-shaped bridge member. The end stops restrict the displacement distance of the arms. Said displacement distance is adjusted by rotating a tightening means, e.g. a spindle that extends through the respective crossbars of the respective H-shaped bridge members. The end stops may be rotatably suspended, one at each free end of the wider second H-shaped bridge member, so that said second H-shaped bridge member is capable of moving smoothly upwards, and thereby move the engagement parts towards each other to tighten the tightening member, or downwards to spread the arms apart to untighten the tightening member.

The first arm and the second arm can advantageously be pivot arms, and the tightening means may be configured to pivot the arms to cause the distal end parts of the respective arms, and thus the first engagement part and the second engagement part, to move towards or away from each other to tighten or untighten the elongated tightening member, respectively.

The pipe clamp assembly of the present invention can e.g. be used for temporarily aligning heavy metal pipes with a diameter between 30 cm and 150 cm.

Within the context of the present invention, the term "tightened position" means the position of the elongated tightening member and the tightening tool when the elongated tightening member is tightened around the adjacent ends of the two opposite pipes to be temporarily aligned. When the pipe ends are aligned in an appropriate tightened position, the elongated tightening member may bridge and be in contact with both pipes, or just one of the pipes. The contact between the elongated tightening member and the pipes ensures that the pipes are kept aligned.

The elongated tightening member of the present invention has a length selected to extend sufficiently around one or both pipe ends to be aligned, but without overlapping.

With the unique construction of the pipe clamp assembly of the present invention, the main body of the tightening tool can be re-used as a part of a wide variety of different pipe clamp assemblies with correspondingly different elongated tightening members by simply replacing one or both of the first engagement part and the second engagement part with a suitable other engagement part that fits a specific elongated tightening member. Thus the tightening tool of the pipe clamp assembly of the present invention can re-used many times, and be altered to fit different elongated tightening members, to thereby reduce production costs and reduces inventory space requirements. It is cost efficient to only replace such a minor part of a tightening tool rather than having to replace the entire tightening tool, e.g. if an engagement part had become damaged or worn. A further advantage is that the welder need not bring along a lot of heavy pipe clamp assemblies. In contrast, one known tensioning tool only fits one known elongated tightening member.

Any of the first engagement part and the second engagement part may be replaced with an engagement part with a different shape and/or different dimensions in order to modify the tightening tool into being able to tighten elongated tightening members having a different shape and/or different dimensions.

In order for the engagement parts to be detachable, and be firmly and reliable secured at the distal end parts of the arms, an engagement part may comprise two separate engagement sub-parts, an interior engagement part and an exterior engagement part arranged on opposite sides of the distal end part. The opposite interior engagement parts face towards each other in the attached position of the engagement parts, whereas the exterior engagement parts faces away from each other. An interior engagement part can be secured to the exterior engagement part by any suitable means.

The interior engagement part can expediently have a middle section configured to couple to the free first distal end part of the first arm or the free second distal end part of the second arm, and opposite lateral enlargements configured to grasp a free end of the tightening member. The middle section can e.g. be a rod that facilitates coupling to a hook-shaped free distal end part of the arm. The exterior engagement part serves as a back-stop that prevents the interior engagement part from dropping off the distal end part when secured to said interior engagement part.

The elongated tightening member may comprise a number of adjusting elements configured for aligning the opposite two pipes, optionally bridging said two pipes, by being in contact with at least one of said pipes, preferably both opposite pipes, optionally applying a force locally to the pipe. Adjustment members, e.g. screws, of the adjusting elements advantageously serve to apply a force locally to the pipe to adjust the relative position of the adjacent ends of the two pipes in order to ensure proper alignment of said adjacent ends. The adjustment members can also be useful in slightly adjusting the shape of the pipe end.

The elongated tightening member may comprises one or more articulated links that allow the elongated tightening member to conform to the exterior perimeter of the pipe end, so that tightening forces can be distributed as required for proper pipe alignment. Preferably, the elongated tightening member can be a chain selected from a single roller chain, a double roller chain or a triple roller chain. The adjusting elements may be configured as links inserted at appropriate distance between sequences of links.

A link may comprise at least one roller, wherein the at least one roller of the links at or close to the opposite free ends of the tightening member can serve to engage the respective detachable first engagement part and detachable second engagement part to thereby assemble the pipe clamp assembly.

Alternatively, the elongated tightening member may comprise pivotally connected semi-circular ring bars (such as known from Tipton clamps); or the elongated tightening member may comprise one or more strapping belts.

The enlargement part of the interior engagement part may advantageously have a first coupling part configured complementary to mating a second coupling part of the free end of the elongated tightening member used for connecting said tightening member to a respective engagement member.

The interior surface of the first coupling part of the interior engagement part may be concave, such as C-shaped or semi-circular shaped, and the exterior surface of the complementary second coupling part of the free end of the elongated tightening member may be correspondingly convex.

An elongated tightening member that can extend at least partly around the pipe(s) and has a number of spaced apart adjusting elements for bridging and contacting one or both pipes may be arranged in the tightened position (a) with the elongated tightening member positioned around both pipes bridging and being in contact with both pipes; or (b) with the elongated tightening member positioned around one of the pipes, and with alignment members (e.g. jackbars) bridging and being in contact with both pipes, where the alignment members are interposed between the links or are moveably arranged on a chain or similar elongated member.

For embodiments where the elongated tightening member is in the form of a double roller chain with a number of alignment members, the double roller chain may be arranged in the tightened position (a) with one of the chains positioned around one of the pipes and the other chain positioned around the other pipe, and with a number of elongated tightening members bridging and being in contact with both pipes; or (b) with both chains positioned around one of the pipes, and the alignment members bridging and being in contact with both pipes. Some applications of a pipe clamp assembly may require a smaller elongated tightening member (e.g. comprising a double roller chain), whereas other applications may require a larger elongated tightening member (e.g. comprising a triple roller chain), and the tightening tool can be modified easily and without special tools, to be suitable for many different applications by detachably attaching a first engagement part and a second engagement part that are suitable for such different applications.

As mentioned above, the arms of the tightening tool is preferably configured for the interior engagement part and the exterior engagement part of an engagement part to be mounted facing each other on opposite sides of a distal end part of the tightening tool, and where the attachment means forces the respective interior engagement part and the exterior engagement part towards each other securing the distal end there between firmly by means of the attachment means, e.g. screws, to thereby hold the engagement part in a fixed manner relative to the main body of the tightening tool.

The attachment means may be one or more screws. As an example: for one or both engagement parts, the interior engagement part may be provided with one or more threaded first screw holes and the exterior engagement part may be provided with the same number of threaded second screw holes, where the first and second holes are aligned in the attached position of the engagement part; and the attachment means in the form of screws are screwed into the one or more aligned threaded first screw holes and threaded second screw holes to interconnect and detachable attach the interior engagement part and the exterior engagement part to the distal end parts of the main body of the tightening tool.

The interior engagement part and the exterior engagement part are preferably configured to delimit a space in between them, which space serves to accommodate the distal end part of the arm of the tightening tool in the attached position of an engagement part as immovable as manufacturing tolerances allows, to make a firm tight fitting accurate secured joining of the detachable engagement part to the main body. Such a tight fit maintains the correct position of the engagement part relative to the main body of the tightening tool.

The space between the interior engagement part and the exterior engagement part of an engagement part can in some embodiment be used to initially loosely interconnect the interior engagement part and the exterior engagement part prior to sliding the free distal end part of the arm of the main body of the tightening tool in between the loosely interconnected interior engagement part and exterior engagement part, and then using the attachment means to further force the interior engagement part and the exterior engagement parts towards each other clamping around said free distal end part. The outline of said space between the loosely interconnected attachment elements may function as a guide to facilitate the detachable attachment and detachment of the engagement part. The interior engagement part and the exterior engagement part may be loosely interconnected by the attachment means during storage to always have all parts of an engagement part ready at hand when used.

The tightening tool and/or the elongated tightening member are preferably made of metal.

The present invention also relates to a method of replacing the first engagement part and second engagement part of the pipe clamp assembly with an identical of different first and/or second engagement part, which can be done by simply detaching the first and/or second engagement part from the main body of the tightening tool; and detachably attaching an identical or a different engagement part(s) instead of the replaced engagement part(s).

The present invention further relates to a method for aligning two pipes using the pipe clamp assembly of the present invention, where the method comprises arranging the elongated tightening member at least partly around the adjacent ends of the two pipes to be aligned, engaging the first engagement part and the second engagement part of the tightening tool with the elongated tightening member, and using the tightening tool to tighten the elongated tightening member to the two pipes.

An exemplary embodiment of the pipe clamp assembly of the present invention is described with reference to the accompanying drawings, where
Fig. 1 shows an embodiments of a pipe clamp assembly of the present invention with its tightening tool in engagement with the elongated tightening member, which is in a tightened position around a pipe,
Fig. 2 shows the assembled tightening tool seen in fig. 1,
Fig. 3 shows the tightening tool seen in fig. 2 without the first and second engagement part,
Fig. 4 is an exploded view of an engagement part of the tightening tool seen in fig. 1, showing the interior engagement part and exterior engagement part seen from the interior engagement part,
   and
Fig. 5 shows the same seen from the exterior engagement part.

Below is described an exemplary embodiment of a pipe clamp assembly according to the present invention. Dimensions, number of links, number of adjusting members, etc. are not to be construed as limiting the scope of the present invention, as such can be altered according to need. The skilled person is aware that extra links and adjusting members can be added to the tightening member to increase length, as well links and adjusting members can be removed to shorten the length of the tightening member.

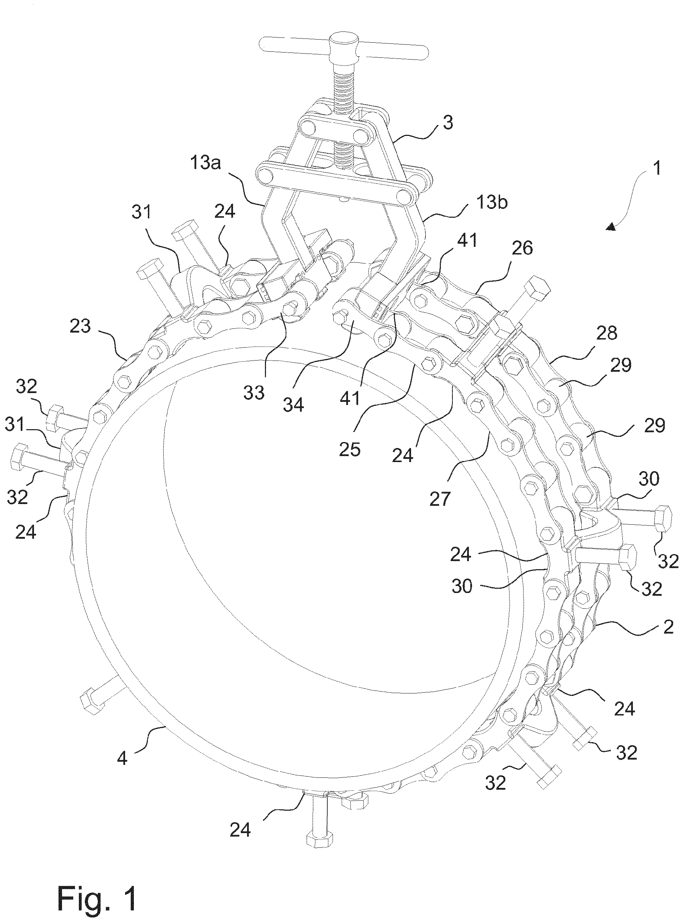

Fig. 1 is a perspective view of a pipe clamp assembly 1, which has an elongated tightening member 2 and a tightening tool 3. The tightening tool 3 is shown in a tightened position around a pipe 4, where, for illustrative reasons, only a section of the pipe 4 is shown.

The elongated tightening member 2 has a first chain part 25 and a second chain part 26 that together makes a double roller chain 23 with a repeated sequence of two chain links and an adjusting element 24.

So the first chain part 25 has a repeated sequence of two first chain links 27 and an adjusting element 24, and the second chain part 26 has a repeated sequent of two second chain links 28 and an adjusting element 24, which is common to both chain parts 25;26 to interconnect those. The double roller chain 23 seen in fig. 1 has seven adjusting elements 24.

The chain links 27;28 and the adjusting elements 24, are hinged together by means of rollers 29.

Each of the seven adjusting elements 24 has two chain link parts 30, one in each of the first chain part 25 and the second chain part 26, and these opposite chain link parts 30 are mutually connected by means of a bridging upwards curving interconnecting part 31 that allows an automatic welding tool to pass below. The interconnecting part 31 of the adjusting elements 24 controls the distance between the chain parts 25;26.

The interconnecting part 31 has two threaded bores (not shown), that receives two threaded alignment screws 32.

Although shown as positioned around a single pipe 4 in fig. 1, the pipe clamp assembly 1 illustrated in fig. 1 is for temporarily aligning two pipes to be joined together, where the first chain part 25 is to be positioned around one of the pipes, and the second chain part 26 is to be positioned around the other of the two pipes. The two pipes could e.g. be two metal pipes with free ends to be joined by welding, in which case the elongated tightening member is intended to be positioned with the two chain parts 25, 26 at substantially the same distance from the intersection between the two pipe ends.

As shown in fig. 1, the interconnecting part 31 of each of the adjusting elements 24 has a central arched portion extending in the direction between the two chain parts 25, 26. The purpose of the arched portion is to provide room for also welding in the area of the adjusting elements 24 in the tightened position.

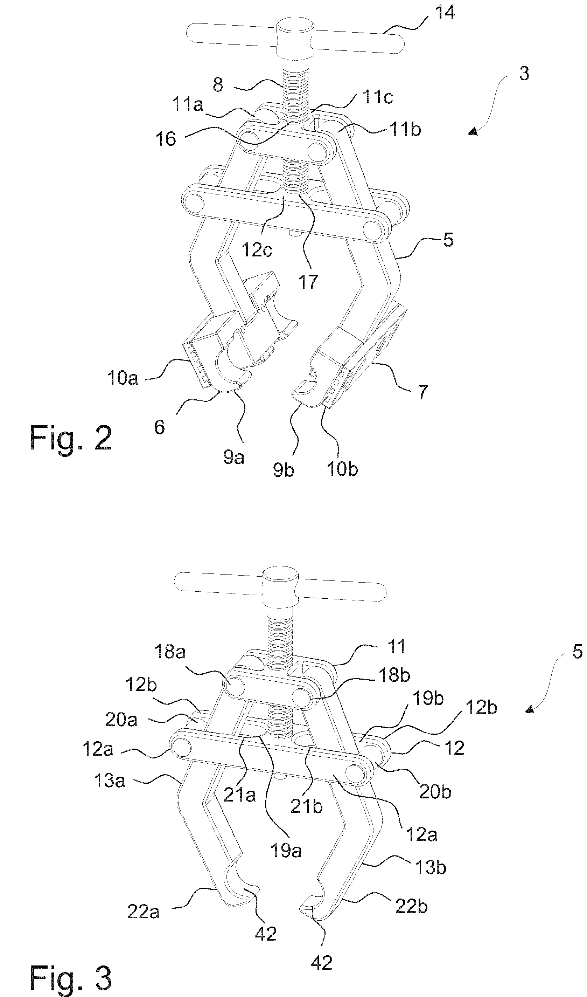

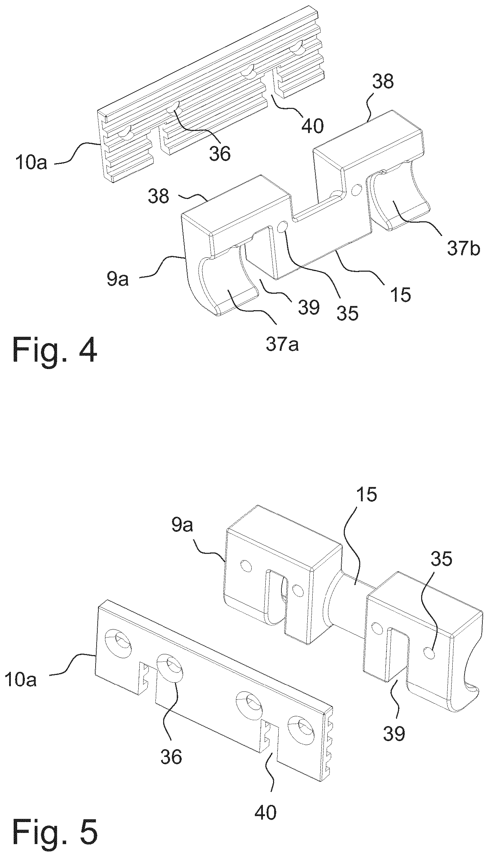

Fig. 2 is a perspective view of the tightening tool 3, which has a main body 5, a first engagement part 6 and a second engagement part 7 detachable attached to the main body 5, and a tightening means 8, in form of a spindle with T-handle. As better shown in figs. 4 and 5, the first engagement part 6 has an interior engagement part 9a and an exterior engagement part 10a; and the second engagement part 7 has a first engagement part 9b and a second engagement part 10b.

The main body 5 of the tightening tool 3 has a first H-shaped bridge member 11, and a wider second H-shaped bridge member 12 below first H-shaped bridge member 11.

The first H-shaped bridge member 11 has a first arm 13a and a second arm 13b pivotally hinged at respective pivot joints 18a, 18b at their opposite free ends 11a,11b, respectively. The first arm 13a, and the second arm 13b pass through opposite slots 19a,19b delimited between the opposite pair of legs 12a,12b of the wider second H-shaped bridge member 12 to thereby define two passages 21a,21b for the respective arms 13a,13b. End stops in form of rollers 20a,20b that bridge the respective pair of legs 12a,12b at their free ends are journaled at said free ends to control the lateral displacement distance of the first arm 13a and the second arm 13b, when a tightening means in form of a spindle 8 is operated.

The spindle 8 threadingly engages both of a central threaded bore 16 in a first crossbar 11c of the first H-shaped bridge member 11, and a central threaded bore 17 in a second crossbar 12c of the wider second H-shaped bridge member 12, so that when a handle part 14 of the spindle 8 is rotated the arms 13a,13b can be moved laterally.

The first engagement part 6 is detachable attached to a first distal end part 22a of the first arm 13a, and the second engagement part 7 is detachable attached to a second distal end part 22b of the second arm 13b.

The interior engagement part 9a;9b of each engagement part 6;7 has middle section 15 configured to couple to the free distal end part 22a;22b of an arm 13a;13b. The middle section 15 has opposite lateral enlargements 38 with semi-circular shaped (or C-shaped) cavities 37a,37b, that matches the shape of rollers 29 at the opposite ends of the two chain parts 25,26 to ensure a firm engagement therewith, and thus a firm coupling therewith.

The middle section 15 constitutes a male part that fits the distal end parts 22a;22b to couple thereto. The distal end parts 22a;22b of the arms 13a;13b are in this exemplary embodiment of a tightening tool 3 configured as hooks or claws and constitutes a female part 42 complementary shaped to the male middel section 15.

The pipe clamp assembly of the present invention it not limited to the shown shape of the male and female parts, as different convex and concave shapes, respectively, could have been used instead.

As seen in figs. 4 and 5, the interior engagement part 9a has four threaded first bores 35 and the exterior engagement part 10a has four threaded second bores 36 alignable with the threaded first bores 35 for, by means of screws (not shown), interconnecting the interior engagement part 9a and the exterior engagement part 10a and detachably attaching the first engagement part 6 to the distal end part 22a of the first arm 13a (as shown in figs. 1 and 2).

The interior engagement part 9a and the exterior engagement part 10a has two first notches 39 and two second notches 40, respectively, for making room for opposite link plates 41 of the chain link 27;28 at a coupling end 33 of chain parts 25,26.

The tightening tool 3 can be used as a part of a different pipe clamp assembly than the one shown in figs. 1 - 5 by simply replacing the shown engagement parts 6,7 with different engagement parts. Such a different pipe clamp assembly could e.g. have a tightening member in the form of a triple roller chain, in which case the tightening tool 3 could be changed by replacing the engagement parts 6,7 with corresponding engagement parts (not shown) that are configured to engage with rollers of such a triple roller chain.

Depending on the situation in which two pipes are to be joined, jackstands may be used for supporting one or both pipes and for arranging the free ends of the pipes in close proximity to each other, in which case
- the elongated tightening member 2 may initially be positioned loosely around the two pipes, where after the tightening tool 3 is brought into contact with the elongated tightening member 2 with the first engagement part 6 being brought into contact with rollers 29 at a coupling end 33 of the two chain parts 25,26, and with the second engagement part 7 being brought into contact with roller 29 at the opposite coupling end 34 of the two chain parts 25,26 (as illustrated in fig. 1);
- where after the tightening means 8 of the tightening tool 3 is operated to move the first H-shaped bridge member 11 and the wider second H-shaped bridge member 12 away from each other, which due to the two passages 21a,21b in combination with the first and second arms 13a,13b being substantially V-shape, moves the first and second engagement part 6,7 towards each other to tighten the elongated tightening member 2 around the pipes; and
- lastly, the threaded screws 32 are operated into firm engagement with the respective pipes to further ensure that the two pipes does not move relative to each other.

## Claims

1. A pipe clamp assembly (1) comprising:
- an elongated tightening member (2) configured to be arranged at least partly around at least one of adjacent ends of two opposite pipes to be temporarily aligned, and
- a tightening tool (3) configured to tighten the elongated tightening member (2), and having a first engagement part (6) and a second engagement part (7) configured to engage the elongated tightening member (2),
**characterized in that**
- at least one of the first engagement part (6) and the second engagement part (7) is detachable.

2. A pipe clamp assembly (1) according to claim 1, **characterized in that** both of the first engagement part (6) and the second engagement part (7) are detachable.

3. A pipe clamp assembly (1) according to claim 1 or 2, **characterized in that** the tightening tool (3) has a main body (5) comprising a first arm (13a) with a free first distal end part (22a) providable with the detachable first engagement part (6), and a second arm (13b) with a free second distal end part (22b) providable with the detachable second engagement part (7), which first (13a) and second arm (13b) are hingely coupled to the main body at opposite proximal end parts, and a tightening means (8) configured for moving the first arm (13a) and the second arm (13b) towards and away from each other to tighten and untighten the elongated tightening member (2), respectively.

4. A pipe clamp assembly (1) according to claim any of the preceding claims, **characterized in that** one or both of the first engagement part (6) and the second engagement part (7) each comprises an interior engagement part (9a, 9b) and an exterior engagement part (10a, 10b).

5. A pipe clamp assembly (1) according to claim 4, **characterized in that** the interior engagement part (9a;9b) of one or both engagement parts (6;7) has a middle section (15) configured to couple to the free first distal end part (22a) of the first arm (13a) or to the free second distal end part (22b) of the second arm (13b), and opposite lateral enlargements (38) configured to grasp a free end (33, 34) of the tensioning member (2).

6. A pipe clamp assembly (1) according to claim 5, **characterized in that** the enlargement parts (38) of the interior engagement part (9a;9b) has a first coupling part configured complementary to a mating second coupling part of the free end (33,34) of the elongated tightening member (2).

7. A pipe clamp assembly (1) according to claim 6, **characterized in that** an interior surface of the first coupling part of the interior engagement part (9a;9b) is concave, such as C-shaped or semi-circular shaped, and an exterior surface of the complementary shaped mating second coupling part of the free end (33,34) of the elongated tightening member (2) is correspondingly convex.

8. A pipe clamp assembly (1) according to any of the preceding claims, **characterized in that** the elongated tightening member (2) comprises a number of spaced apart adjusting elements (24) configured for aligning the opposite two pipes, optionally bridging said two pipes, by being in contact with at least one pipe, preferably both opposite pipes, optionally applying a force locally to the pipe(s).

9. A pipe clamp assembly (1) according to any of the preceding claims, **characterized in that** the elongated tightening member (2) comprises one or more articulated links (27,28), preferably the elongated tightening member (2) is selected from a single roller chain, a double roller chain, or a triple roller chain.

10. A pipe clamp assembly (1) according to claim 9, **characterized in that** a link (27,28) of the one or more articulated links (27,28) comprises at least one roller (29), and wherein the at least one roller (29) of the links (27,28) at the opposite free ends (33,34) of the tightening member (2) serve to engage the respective detachable first engagement part (6) and detachable second engagement part (7).

11. A method for aligning two pipes using the pipe clamp assembly according to any of the preceding claims 1 - 10, **characterized in that** the method comprises:
- arranging the elongated tightening member (2) at least partly around and bridging the adjacent ends of the two pipes to be aligned,
- engaging the first engagement part (6) and the second engagement part (7) with the elongated tightening member (2), and
- using the tightening tool (3) to tighten the elongated tightening member (2) to the two pipes.

12. A method for replacing the first (6) and/or second engagement part (7) of the pipe clamp assembly (1) according to any of preceding claims 1 - 10, **characterized in that** the method comprises:
- detaching the first engagement part (6) and/or the second engagement part (7) from the main body (5) of the tightening tool (3); and
- detachably attaching an identical or a different engagement part(s) instead of the replaced engagement part(s).
